# EUROPEAN PATENT APPLICATION

(11) **EP 3 450 528 A1**
(43) Date of publication of application: **06.03.2019**
(21) Application number: 17779032.6
(22) Date of filing: 30.03.2017
(51) Int. Cl.: C10M 169/00

(54) **GREASE COMPOSITION AND SLIDING MEMBER**

(30) Priority: 06.04.2016 JP 2016076254
(71) Applicant: Dow Corning Toray Co., Ltd., Tokyo 100-0004 (JP)
(72) Inventor: YOKOYAMA Taka, Ashigarakamigun Kanagawa 258-0112 (JP); TANAKA Teruyoshi, Ashigarakamigun Kanagawa 258-0112 (JP); YAMAGUCHI Tetsuji, Ashigarakamigun Kanagawa 258-0112 (JP)
(74) Representative: Murgitroyd & Company
(86) International application number: PCT/JP2017/013138
(87) International publication number: WO 2017/175653

(57) **Abstract**

[Technical Problem]

To provide a grease composition having excellent damping characteristics, hardly any problem with oil separation even at high temperatures, excellent lubricating performance, and an ability to reduce noise generated by a mechanical device when applied to a noise-generating site in the mechanical device, and to provide a sliding member, etc., to which this grease composition has been applied.

[Solution to Problem]

A grease composition comprising: 100 parts by mass (A) aryl group-containing polyorganosiloxane; 1 to 50 parts by mass (B) acrylic block copolymer having a weight average molecular weight of from 10,000 to 1,000,000 and a molecular weight distribution [ratio (Mw/Mn) of weight average molecular weight (Mw) to number average molecular weight (Mn)] of 1.5 or less, component (B) being from 1 to 40 mass% of the overall composition; and (C) solid particles.

## Description

### [Technical Field]

The present invention relates to a grease composition having excellent damping characteristics, hardly any problem with oil separation even at high temperatures, excellent lubricating performance, and an ability to reduce noise generated by a mechanical device when applied to a noise-generating site in the mechanical device, and to provide a sliding member, etc., to which this grease composition has been applied. The present invention also relates to components and mechanical devices having such a member. In addition, the present invention relates to a noise-reducing method for a mechanical device characterized by the application of such a grease composition to a sliding member.

### [Background Art]

Sliding members to which a grease composition has been applied are used in drive components, sliding components, and moving components in mechanical devices such as automobiles. Even though these grease compositions have been applied over a long period of time to improve the reliability and longevity of sliding parts, there has been growing demand in recent years for grease compositions which also have excellent durability and lubricating performance. Automotive parts in particular are cooled to low temperatures due to contact with outside air and heated to high temperatures due to heat from an engine. In addition, they have been miniaturized and sealed in each unit in response to the increasing use of electronics and demands for improved quietness. As a result, they are subjected to even higher temperatures inside these units during use. Mechanical devices such as automobiles have to withstand use in cold environments, and grease compositions are required that can exhibit stable lubricating performance in a wide low to high temperature range.

In order to solve this problem, greases have been proposed whose base oil is dimethyl silicone oil or phenylmethylsilicone oil as these base oils can be used in a wide temperature range. However, these greases have insufficient lubricating performance. When an organopolysiloxane composition described in Patent Document 1 is used as a base oil, stable lubricating performance can be realized in a wide temperature range. However, there is room for improvement in the performance of these compositions.

A lubricating oil additive containing an acrylic polymer has been disclosed in Patent Document 2. This lubricating oil additive can improve the viscosity index when a small amount is added, and can also improve low temperature characteristics, flow characteristics, and shear stability. However, Patent Document 2 neither describes nor suggests the use of silicone oil, especially silicone oil having a phenyl group.

Disk brakes are widely used in mechanical devices such as automobiles, and these have a structure in which pressure is applied to both sides of a disk rotor rotating with a wheel using brake pads. Disk brakes generate a noise called "squealing" when pressure is applied to a disk rotor by brake pads braking. While squealing does not affect braking performance, it is an unpleasant noise for the driver and passengers to hear, and the application of grease using silicone oil has been proposed as a countermeasure (Patent Document 3, etc.). However, the grease compositions that have been proposed have insufficient noise-reducing and lubricating performance and there is still room for improvement.

### [Citation List]

### [Patent Literature]

[Patent Literature 1] WO 2015/077391 A1
[Patent Literature 2] WO 2006/009083 A1 (JP 5021303 B2)
[Patent Literature 3] JP 2012-241167 A

### [Summary of Invention]

### [Technical Problem]

In addition, the present inventors have discovered a new problem when grease compositions use silicone oil, which has excellent heat resistance, as the base oil. Specifically, the present inventors discovered that the oil component separates from the grease composition when a grease composition using conventional silicone oil as the base oil is used at high temperatures, and the damping characteristics and lubricating performance decline. The separation of the oil component from the grease composition is caused by drying and is sometimes the cause of the overall decline in lubricating performance by the grease. This problem is difficult to solve even when the organopolysiloxane composition described in Patent Document 1 is used. Also, the technical problem of providing a noise-reducing grease that can suppress noise from brake pads during braking and the rubbing sound (noise) from sliding members is difficult to solve even when the organopolysiloxane composition described in Patent Document 1 or the grease compositions described in Patent Documents 2 and 3 are used.

Therefore, it is an object of the present inventors to provide a grease composition having excellent damping characteristics, hardly any problem with oil separation even at high temperatures, excellent lubricating performance, and an ability to reduce noise generated by a mechanical device when applied to sliding members in mechanical devices, especially sliding members in automobiles such as brakes and gears, and sliding members in copying machines. It is another object of the present inventors to provide sliding members to which such a grease composition has been applied, such as brakes, gears, and parts for copying machines. It is another object of the present inventors to provide a method for reducing noise generated by mechanical devices and damping noise generated by mechanical devices using such a grease composition.

### [Solution to Problem]

As a result of extensive research conducted to solve this problem, the present inventors discovered that the problem could be solved using a grease composition comprising 100 parts by mass (A) aryl group-containing polyorganosiloxane; 1 to 50 parts by mass (B) acrylic block copolymer having a weight average molecular weight of from 10,000 to 1,000,000 and a molecular weight distribution [ratio (Mw/Mn) of weight average molecular weight (Mw) to number average molecular weight (Mn)] of 1.5 or less, component (B) being from 1 to 40 mass% of the overall composition. The present invention is a product of this discovery.

The present inventors also discovered that this problem could be solved more advantageously by a grease composition in which component (A) is an aryl group-containing polyorganosiloxane having at least 10 mol% phenyl groups among all monovalent functional groups bound to silicon atoms, in which component (B) is a block copolymer having at least one type of structure selected from among those represented by formulas (Y-Z)ₐ, (Y-Z)_{b}-Y and (Z-Y)_{c}-Z [where Y is a polymer block composed of a (meth) acrylic acid alkyl ester unit with an alkyl group having from 1 to 3 carbon atoms; Z is a polymer block composed of a (meth) acrylic acid alkyl ester unit with an alkyl group having from 4 to 30 carbon atoms; and a, b and c are the same or different integer from 1 to 10], and in which the grease composition also contained from 1 to 200 parts by mass (C) solid particles. The present invention is a product of these discoveries. The problem can be solved even more advantageously when the component (C) is a solid lubricant containing a fluororesin such as polytetrafluoroethylene (PTFE), and from 1 to 60 mass% of the overall grease composition is component (C).

Similarly, the present inventors were able to solve the problem using a sliding member to which such a grease composition has been applied; a component such as a drive component, sliding component, or moving component having such a sliding member; and a mechanical device such as an automobile, copying machine, or printing machine having such a sliding member. The present invention is a product of this discovery.

The present inventors were able to solve the problem using a noise-reducing method for a mechanical device characterized by the application of such a grease composition to a sliding member. The present invention is a product of this discovery.

### [Advantageous Effects of Invention]

The present inventors were able to provide a grease composition having excellent damping characteristics, hardly any problem with oil separation even at high temperatures, excellent lubricating performance, and an ability to reduce noise generated by a mechanical device when applied to a sliding member in the mechanical device or a sliding member in an automobile such as brakes, and to provide a sliding member to which this grease composition has been applied, such as brakes. The present inventors were also able to provide a method for reducing noise generated by mechanical devices and damping noise generated by mechanical devices using such a grease composition.

### [Description of Embodiments]

A first aspect of the present invention is a grease composition comprising: 100 parts by mass (A) aryl group-containing polyorganosiloxane; 1 to 50 parts by mass (B) acrylic block copolymer having a weight average molecular weight of from 10,000 to 1,000,000 and a molecular weight distribution [ratio (Mw/Mn) of weight average molecular weight (Mw) to number average molecular weight (Mn)] of 1.5 or less, component (B) being from 1 to 40 mass% of the overall composition; and preferably 1 to 200 parts by mass (C) solid particles. The following is a description of these technical characteristics.

### [(A) Aryl Group-Containing Polyorganosiloxane]

An aryl group-containing polyorganosiloxane (A) is the base oil in a grease composition of the present invention. When combined with component (B) described below, a grease composition can be realized which has excellent damping characteristics and hardly any problem with oil separation even at high temperatures. The aryl group is a functional group derived from an aromatic hydrocarbon. Some of the hydrogen atoms may be substituted with a halogen atom (fluorine, chlorine, etc.), and some may be unsubstituted aromatic hydrocarbon groups. Examples of aryl groups include a phenyl group, methylphenyl group (tolyl group), xylyl group, and naphthyl group. A phenyl group is preferred from an industrial standpoint.

In component (A) of the present invention, there are no particular restrictions on the position and number of substituents for aryl groups on the polyorganosiloxane chain. However, from the standpoint of compatibility with component (B), the aryl group-containing polyorganosiloxane preferably has at least 10 mol% phenyl groups, more preferably from 15 to 50 mol%, and even more preferably from 20 to 45 mol%, among all monovalent functional groups bound to silicon atoms. When the aryl group content (especially phenyl group content) of component (A) falls below the lower limit, compatibility with component (B) is poor during the mixing process and the resulting grease composition may have poorer stability. Both ends terminate with a triorganosiloxy group. In a polyorganosiloxane whose main chain constituent element is a diorganosiloxy group (RRSiO₂/₂), half of the monovalent functional groups (-R) bound to the silicon atom on the diorganosiloxy groups (RRSiO₂/₂) of the main chain may be substituted with an aryl group such as a phenyl group. In this case, some or all of the monovalent functional groups bound to the silicon atoms on the terminating triorganosiloxy groups of the main chain may be substituted with an aryl group such as a phenyl group. When half of the six functional groups on both ends are substituted with aryl groups such as phenyl groups, 50 mol% of the monovalent functional groups bound to all silicon atoms are substituted with aryl groups such as phenyl groups. However, in component (A) of the present invention, other organosiloxane groups forming a branch structure or resin structure are not precluded, including monoorganosiloxane units (RSiO₃/₂) and SiO₄/₂ units in particular, and the linear, branched, network, and cyclic structures may be a polyorganosiloxane including some of these.

In addition to an aryl group such as a phenyl group, component (A) in the present invention preferably has in the molecule a fluoroalkyl group represented by -(CH₂)ₓ-R₁ (where R₁ is a perfluoroalkyl group having from 1 to 12 carbon atoms and x is a number in a range from 0 to 6). Specific examples of fluoroalkyl groups include a trifluoropropyl group, pentafluorobutyl group, heptafluoropentyl group, nonafluorohexyl group, undecafluoroheptyl group, tridecafluorooctyl group, pentadecafluorononyl group, and heptadecafluorodecyl group. Among these, a trifluoropropyl group is preferred from the standpoint of economy and ease of manufacture. Among all of the monovalent functional groups bound to silicon atoms in component (A), when 1 mol% or more, and preferably from 5 to 40 mol%, are fluoroalkyl groups, stable lubricating properties can be realized in a wide temperature range.

In component (A) of the present invention, the other monovalent functional groups bound to silicon atoms are aryl groups and more preferably fluoroalkyl groups. However, other functional groups may be alkyl groups having from 1 to 12 alkyl groups, aralkyl groups having from 7 to 20 carbon atoms, hydroxyl groups, and alkoxy groups having from 1 to 6 carbon atoms. Among alkyl groups having from 1 to 12 alkyl groups, a methyl group is preferred from the standpoint of economy and heat resistance. Among aralkyl groups having from 7 to 20 carbon atoms, a benzyl group or phenethyl group is preferably used. Among the alkoxy groups having from 1 to 6 carbon atoms, a methoxy group, ethoxy group, or n-propoxy group is preferred. The silicon atom-bonded functional groups other than aryl groups and fluoroalkyl groups in component (A) are preferably methyl groups or hydroxyl groups.

There are no restrictions on the range for the kinetic viscosity at 25°C in component (A) of the present invention. From the standpoint of handling as a base oil and grease composition, the range is preferably from 100 to 100,000 mm²/s and more preferably from 250 to 50,000 mm²/s.

In the present invention, component (A) is preferably a copolymer-type aryl group-containing polyorganosiloxane containing the following disiloxane unit (a1):

SiR²((CH₂)x-R¹)O₂/₂

(where R¹ is a perfluoroalkyl group having from 1 to 12 carbon atoms, R² is an alkyl group having from 1 to 6 carbon atoms, and x is a number in a range of from 0 to 6); and
the following disiloxane unit (a2):

SiR²(Ph)O₂/₂

(where R² is the same as above and Ph is a phenyl group). Copolymer-type aryl group-containing polyorganosiloxanes are described in great detail in Patent Document 1 (WO2015/077391A1), and have the advantage of realizing stable lubricating performance in a wide temperature range. These copolymer-type aryl group-containing polyorganosiloxanes are very compatible with component (B). When these components are combined, the technical effects addressing the problem of the present invention, namely, damping characteristics, oil separation at high temperatures, and noise reduction in mechanical devices, can be more advantageously realized. In these formulas, R₂ is an alkyl group having from 1 to 6 carbon atoms. A methyl group is preferred.

The kinetic viscosity at 25°C of these copolymer-type aryl group-containing polyorganosiloxanes is preferably from 100 to 100,000 mm²/s and more preferably from 250 to 50,000 mm²/s from the standpoint of handling and workability.

The preferred ranges for aryl group content and perfluoroalkyl group content in these copolymer-type aryl group-containing polyorganosiloxanes are the same as above. The arrangement of the disiloxane units (a1) and (a2) in the copolymer structure may be a block or random arrangement. A copolymer-type aryl group-containing polyorganosiloxane represented by the following structural formula is especially preferred.

R³Me₂SiO(SiMe(Tfp)O)ₘ(SiMePh)ₙ(SiMe₂O)ₚSiMe₂R³

(In this formula, Me is a methyl group, Ph is a phenyl group, Tfp is a trifluoropropyl group, and R³ is a methyl group or hydroxyl group; for m, n and p, m is a number equal to or greater than 1, n is a number equal to or greater than 1, and p is a number equal to or greater than 0; m+n+p is the number of a polyorganosiloxane represented by the structural formula whose kinetic viscosity at 25°C is in a range from 100 to 100,000 mm²/s;
the phenyl group content among all substituents is such that n/(6+2m+2n+2p) × 100 (mol%) is in a range from 5 to 45 mol%; and
the trifluoropropyl group content among all substituents is such that m/(6+2m+2n+2p) × 100 (mol%) is in a range from 5 to 45 mol%)

These copolymer-type aryl group-containing polyorganosiloxanes can be synthesized using the method described in Patent Document 1 (WO2015/077391A1), and other aryl group-containing polyorganosiloxanes are commercially available.

### [(B) Acrylic Block Copolymer]

Component (B) is a component combined with an aryl group-containing polyorganosiloxane (A) to specifically realize the technical effects of the present invention. When component (B) in the same amount as the present invention is combined with another silicone base oil such as polymethylsiloxane, the compatibility is poor and a grease composition cannot be obtained. When combined with other base oils common in the art, heat resistance is poor. In other words, the combination of component (A) and component (B) is a specific combination required to realize the remarkable technical effects of the present invention.

Component (B) is an acrylic block copolymer having a weight average molecular weight of from 10,000 to 1,000,000 and a molecular weight distribution [ratio (Mw/Mn) of weight average molecular weight (Mw) to number average molecular weight (Mn)] of 1.5 or less, especially a molecular weight distribution [ratio (Mw/Mn) of weight average molecular weight (Mw) to number average molecular weight (Mn)] of 1.3 or less. The lubricating oil additives disclosed in Patent Document 2 (WO06/009083A1 (JP5021303B2)) can be used. The number average molecular weight (Mn), the weight average molecular weight (Mw), and the molecular weight distribution (Mw/Mn) are defined by measurements using gel permeation chromatography (GPC) in the manner disclosed in Patent Document 2.

Preferably, component (B) in the present invention is a block copolymer having at least one type of structure selected from among those represented by formulas (Y-Z)ₐ, (Y-Z)_{b}-Y and (Z-Y)_{c}-Z
[where Y is a polymer block composed of a (meth) acrylic acid alkyl ester unit with an alkyl group having from 1 to 3 carbon atoms; Z is a polymer block composed of a (meth) acrylic acid alkyl ester unit with an alkyl group having from 4 to 30 carbon atoms; and a, b and c are the same or different integer from 1 to 10]. Note that the (meth) acrylic acid alkyl ester unit in the present invention is a concept including both an acrylic acid alkyl ester unit and a methacrylic acid alkyl ester unit as described below.

More preferably, in the block copolymer, the Y:Z mass ratio of the overall mass of the copolymer block represented by Y and the overall mass of the copolymer block represented by Z is from 1:99 to 40:60, preferably from 2:98 to 30:70, and more preferably from 5:95 to 25:75. In these ranges, the copolymer uniformly dissolves in the component (A) base oil and a small amount improves the viscosity index.

The number average molecular weight of the copolymer block represented by A is preferably from 2,000 to 300,000, more preferably from 2,000 to 200,000, and even more preferably from 3,000 to 100,000. The number average molecular weight of the copolymer block represented by B is preferably from 2,000 to 700,000, more preferably from 2,000 to 500,000, and even more preferably from 3,000 to 200,000.

Examples of block copolymers represented by represented by formulas (Y-Z)ₐ, (Y-Z)_{b}-Y and (Z-Y)_{c}-Z include polymethyl methacrylate-b-2-ethylhexyl polymethacrylate, polymethyl methacrylate-b-lauryl polymethacrylate, polymethyl methacrylate-b-n-butyl polyacrylate, polymethyl methacrylate-b-2-ethylhexyl polyacrylate, polymethyl methacrylate-b-2-ethylhexyl-polymethacrylate-b-polymethyl methacrylate, polymethyl methacrylate-b-lauryl polymethacrylate-b-polymethyl methacrylate, polymethyl methacrylate-b-polyacrylic acid n-butyl-b-polymethyl methacrylate, polymethyl methacrylate-b-polyacrylic acid 2-ethylhexyl-b-polymethyl methacrylate, 2-ethylhexyl polymethacrylate-b-polymethyl methacrylate-b-2-ethylhexyl polymethacrylate, lauryl polymethacrylate-b-polymethyl methacrylate-b-lauryl polymethacrylate, polyacrylic acid n-butyl-b-polymethyl methacrylate-b-n-butyl acrylate, and polyacrylic acid 2-ethylhexyl-b-polymethyl methacrylate-b-2-ethylhexyl polyacrylate. Those in which the polymer block represented by Y is a polymer block composed of a methacrylic acid alkyl ester unit and the polymer block represented by Z is a polymer block composed of an acrylic acid alkyl ester unit are preferred from the standpoint of excellent shear stability during use with component (A) added as the base oil. Constituent units of other polymer blocks may be included in the polymer blocks represented by Y and Z if a small amount is added in a range that does not impair the effects of the present invention (20 mass% or less of the polymer block).

In addition to those that can be synthesized using the method disclosed in Patent Document 2, the acrylic block copolymer in component (B) can be Clarity™ from Kuraray Co., Ltd. which is a commercially available line of acrylic thermoplastic elastomers.

### [Number of Parts (Parts by Mass)]

When silicone oil has been selected as the base oil, component (B) in the present invention has to be particularly compatible only with the aryl group-containing polyorganosiloxane in component (A). From the standpoint of the technical effect of the present invention, the amount of component (B) per 100 parts by mass component (A) is preferably from 1 to 50 parts by mass, more preferably from 2 to 30 parts by mass, and even more preferably from 3 to 25 parts by mass. When the component (B) content is below the lower limit, the technical effects of the present invention cannot be sufficiently realized. When the component (B) content exceeds the upper limit, the consistency of the grease is sometimes too low. Because of hardness, there are severe limits on the components with which the grease can be used.

### [Content (Mass%)]

In a grease composition of the present invention, component (A) and component (B) are essential components with a quantitative relationship and other components can be used. However, from the standpoint of the technical effects of the present invention, the component (B) content is preferably from 1 to 40 mass%, more preferably from 2 to 20 mass%, and even more preferably 3 to 18 mass% per 100 mass% of the overall grease composition. When the component (B) content relative to the overall composition is below the lower limit, the technical effects of the present invention are sometimes insufficient even when it satisfies the quantitative relationship with component (A). When the component (B) content exceeds the upper limit, it can be difficult to prepare a grease composition despite the high viscosity improving ability.

From the standpoint of the technical effects of the present invention, the component (B) content relative to the overall composition is preferably within the aforementioned range and the base oil component (A) content is preferably from 30 to 99 mass%, more preferably from 35 to 95 mass%, and even more preferably from 36 to 90 mass%.

### [(C) Solid Particles]

In a grease composition of the present invention, component (A) and component (B) are the essential components. However, at least one type of solid particle (C) is preferably also included from the standpoint of solving the problem with oil separation even when used at high temperatures. There are no particular restrictions on the performance of the solid particles. They may function as a filler or as a solid lubricant in the case of a fluororesin such as polytetrafluoroethylene (PTFE). There are no particular restrictions on the material used. It may be an organic resin powder such as a polyethylene resin or an inorganic powder such as molybdenum disulfide.

There are no particular restrictions on the solid particles. A single type of powder or two or more types of powder may be used. Specific examples include molybdenum disulfide, tungsten disulfide, calcium stearate, mica, graphite, lubricating resins such as polytetrafluoroethylene (PTFE), and composite oxides with oxygen-defect perovskite structure (SrₓCa₁₋ₓCuO_{y}, etc.). Others include fine particles which suppress direct contact between metals and have an expected anti-scorching action such as carbonates (carbonates of alkali metals and alkaline earth metals such as Na₂CO₃, CaCO₃, and MgCO₃), silicates (MₓO_{y}SiO₂ [where M is an alkali metal or alkaline earth metal], etc.), metal oxides (typical metal oxides, transition metal oxides, and composite oxides of these metals [Al₂O₃/MgO etc.], etc.), sulfides (PbS, etc.), fluorides (CaF₂, BaF₂, etc.), carbides (SiC, TiC), nitrides (TiN, BN, AlN, and Si₃N₄, etc.), cluster diamonds, and fullerene C60 or a mixture of fullerene C60 and fullerene C70. Examples of typical metal oxides include Al₂O₃, CaO, ZnO, SnO, SnO₂, CdO, PbO, Bi₂O₃, Li₂O, K₂O, Na₂O, B₂O₃, SiO₂, MgO, and In₂O₃. Among these typical metal oxides, alkaline earth metals, aluminum, and zinc are preferred. Examples of transition metal oxides include TiO₂, NiO, Cr₂O₃, MnO₂, Mn₃O₄, ZrO₂, Fe₂O₃, Fe₃O₄, Y₂O₃, CeO₂, CuO, MoO₃, and Nd₂O₃.

The solid particles preferably function as a solid lubricant. Examples include fine particles of organic compounds such as fluororesins (especially polytetrafluoroethylene, tetrafluoroethylene hexafluoropropylene copolymer, etc.), polyethylene resins, polyamide resins, polypropylene resins, polyimide resins and silicone resin, fine particles of inorganic compounds such as molybdenum disulfide, graphite, silicon oxide, aluminum oxide and zinc oxide, and fine particles of metals such as zinc, and mixtures thereof. Use of at least one type of solid lubricant selected from among a fluororesin, polyethylene resin, polyamide resin, molybdenum disulfide, graphite, aluminum oxide, zinc oxide, titanium oxide, zirconium oxide and mixtures thereof is preferred.

The average particle size of the solid lubricant is preferably 30 µm or less, more preferably from 0.1 to 20 µm, and even more preferably from 0.2 to 15 µm. Here, the average particle size is the volume average particle size measured using a laser diffraction-type particle size distribution measuring device or the average particle size observed using a scanning electron microscope.

A grease composition of the present invention may include solid particles other than a solid lubricant. These solid particles may impart the desired function to the grease composition of the present invention. There are no particular restrictions on the type of solid particle. Examples of functional particles include reinforcing fillers; thickening agents; antiwear agents; pigments; colorants; UV absorbers; thermally conductive fillers; conductive fillers; and insulating materials. These particles may be combined with other functional particles.

There are no particular restrictions on the shape of the solid particles, which may be particulate, tabular, acicular, or fibrous. When the shape of the solid particles is anisotropic, such as tabular, acicular, or fibrous, the aspect ratio can be 1.5 or higher, 5 or higher, or 10 or higher.

In a grease composition of the present invention, the solid particles (C) are preferably a solid lubricant containing a fluororesin, especially solid particles made of polytetrafluoroethylene (PTFE). Especially preferred is the use of spherical polytetrafluoroethylene resin fine particles having an average particle size of from 1 to 10 µm as measured in a laser diffraction scattering type particle size distribution measurement (dry method).

The solid particle (C) content per 100 parts by mass base oil component (A) is from 1 to 200 parts by mass, preferably from 3 to 150 parts by mass, and more preferably 5 to 120 parts by mass. Use of solid particles can effectively improve the problem of oil separation in grease compositions of the present invention at high temperatures. Use of a polytetrafluoroethylene (PTFE) solid lubricant not only eliminates oil separation, it also further improves the lubricating performance of the grease composition. Sliding members to which such a grease composition has been applied can maintain excellent sliding characteristics over a long period of time, and mechanical devices using such sliding members more effectively realize noise reduction.

### [Thickener]

A grease composition of the present invention may contain another thickener. Fluororesins such as polytetrafluoroethylene (PTFE) serving as component (C) also function as a thickener. Thickeners other than fluororesins include metal soaps such as Li soap, urea resins, minerals such as bentonite, organic pigments, polyethylene, polypropylene, and polyamide. From the standpoint of heat resistance and lubricity, use of aliphatic dicarboxylic acid metal salts, monoamide monocarboxylic acid metal salts, monoester carboxylic acid metal salts, diurea, triurea, and tetraurea is preferred.

### [Other Components]

If necessary, other additives may be included in a grease composition of the present invention. Examples include antioxidants, rust inhibitors, corrosion inhibitors, extreme pressure agents, oiliness improvers, sludge agents or base oil diffusion inhibitors, corrosion inhibitors, metal deactivators, dyes, hue stabilizers, thickening agents, and structural stabilizers. In addition to these additives, synthetic, recycled and natural fibers, and sticky substances such as rubber dust and cashew resin dust may be included.

Examples of antioxidants include phenolic antioxidants such as 2,6-di-tert-butyl-4-methylphenol and 4,4'-methylenebis (2,6-di-tert-butylphenol), and amine oxidants such as alkyl diphenylamine, triphenylamine, phenyl-α-naphthylamine, phenothiazine, alkylated-α-naphthylamine, and alkylated phenythiazine.

Examples of rust inhibitors include fatty acids, fatty acid amines, alkylsulfonic acid metal salts, alkylsulfonic acid amine salts, oxidized paraffins, and polyoxyethylene alkyl ethers. Examples of corrosion inhibitors include benzotriazole, benzimidazole, and thiadiazole.

Examples of extreme pressure agents include phosphorus compounds such as phosphate esters, phosphite esters and phosphoric ester amine salts, sulfur compounds such as sulfides and disulfides, dialkyl dithiophosphate metal salts and dialkyl dithiocarbamate metal salts.

Examples of oiliness improves include fatty acids or esters thereof, higher alcohols, polyhydric alcohols or esters thereof, aliphatic amines, and fatty acid monoglycerides.

Examples of sludge agents or base oil diffusion inhibitors include fluorine-based silane compounds, behenic acid, and styrene block copolymers.

Component (A), component (B) and optionally component (C) are preferably mixed together under the conditions described above and mill finished using a roll mill to readily obtain a grease composition of the present invention.

### [Grease Consistency]

There are no particular restrictions on the consistency of a grease composition of the present invention, but from 150 to 400 is preferred, and from 200 to 400 and from 210 to 390 are especially preferred for practical use. When the consistency falls below the lower limit, the grease composition is too hard and problems occur with coating. When the consistency exceeds the upper limit, base oil separation occurs due to heat after application to, for example, brakes.

A grease composition of the present invention can be used to form a lubricating film on the surfaces of sliding members made of metal, resin, or ceramics. This improves the service life of lubricated components used as sliding members and sliding components. A grease composition of the present invention has excellent damping characteristics, hardly any problem with oil separation even at high temperatures, excellent lubricating performance, and an ability to reduce noise generated by a mechanical device when applied to a sliding member in the mechanical device or a sliding member in an automobile such as brakes. When applied to sliding members in, for example, automobiles which are used outdoors, it can provide stable lubricating properties and noise reduction in mechanical devices over a long period of time in a wide temperature range from low air temperatures to high temperatures caused by engine heat.

In addition to sliding members, a grease composition of the present invention can be applied to any commonly lubricated component such as roller bearings, sliding bearings, and gears, and can be applied at any spot commonly lubricated with grease. Because a grease composition of the present invention has excellent damping characteristics, heat resistance, lubricity, and low noise characteristics, and can realize stable lubricating performance over a long period of time in a wide temperature range, it can be applied effectively to mechanical devices such as automobiles, copying machines, and printing machinery. There are no particular restrictions on the method used to apply a grease composition of the present invention.

Sliding members to which a grease composition of the present invention has been applied can be used effectively as drive components, sliding components, and moving components. A grease composition of the present invention can be applied advantageously to mechanical devices having sliding members such as automobiles, copying machines, and printing machinery. When applied to such members, a grease composition of the present invention can reduce noise generated by a mechanical device (including squealing brakes).

Preferred examples of sliding members to which a grease composition of the present invention can be applied include driving components, sliding components, and moving components in automobiles, copying machines, and printing machinery (printers). In this way, a mechanical device with reduced noise can be obtained. Especially preferred examples include braking members and gears in automobiles.

Examples of rubber sliding members include a timing belt, conveyor belt, sunroof seal, weather strip, oil seal, packing, wiper blade, doctor blade, charging roller, developing roller, toner supply roller, transfer roller, heat roller, pressure roller, cleaning blade, paper feed roller, transporting roller, doctor blade, intermediate transfer belt, intermediate transfer drum, heat belt, and other driving components, sliding components, and moving components in an automobile, copying machine, or printer.

Examples of plastic sliding members include door panels, instrument panels, door locks, bearings, gears, belt tensioners, fixing belts, pressure belts, and other drive components, sliding components, and moving components for use in automobiles, copying machines, and printing machinery.

Examples of metal sliding members include crankshafts, compressor shafts, slide bearings, gears, oil pump gears, pistons, piston rings, piston pins, gaskets, door locks, guide rails, seat belt buckles, brake pads, brake pad clips, brake shims, brake insulators, hinges, screws, pressure pads, and other drive components, sliding components, and moving components for use in automobiles, copying machines, and printing machinery.

### [Industrial Applicability]

Grease compositions of the present invention can exhibit stable lubricating performance in a wide low to high temperature range, and can reduce noise generated by mechanical devices when applied at noise-generating sites such as to sliding components, gears, and rotating components. There are no particular restrictions on the components to which grease compositions of the present invention can be applied. Possible applications include consumer electronics, ships, trains, aircraft, machinery, structures, automobile repair, automobiles, architecture, building materials, fibers, leather, pens, woodworking, furniture, sundries, steel plates, cans, electronic boards, electronic parts, and printing.

### [Examples]

The following is a more detailed description of the present invention with reference to examples. The present invention is not limited to these examples.

### [Examples 1-8 and Comparative Examples C1-C5]

Component B was dissolved in toluene and oil A was uniformly mixed with the toluene solution of component B at the ratios shown in Table 1 and Table 2. The toluene was evaporated in an oven to obtain uniform mixtures of component A and component B. Solid powder C was mixed in a dental mixer with the mixtures of component A and component B, processed using a three-roll mill, and defoamed using a dental mixture to obtain the grease compositions in Examples 1-8 and Comparative Examples C1-C5. The numerical values in Table 1 and Table 2 are parts per mass. When the components were incompatible in the mixing process and a grease composition could not be prepared, this is noted in the tables. More specifically, in Comparative Example C5, methyl silicone was incompatible with every type of component (B) used and a grease composition could not be prepared.

The following are the components listed in Table 1 and Table 2. In component (a1), "Tfp group" refers to a trifluoropropyl group. The molar ratio of trifluoropropylmethyl siloxane units to methylphenyl siloxane units in component (a1) is about 50:50.
(A) Base Oils:
   (a1) Tfp group-containing phenyl silicone: Trimethylsiloxy-terminated poly (trifluoropropylmethylsiloxane) (methylphenylsiloxane) copolymer synthesized using the method described in Example 4 of Patent Document 1 (WO2015/077391A1)
   (a2) Phenyl silicone: Trimethylsiloxy-terminated polymethylphenylsiloxane (550 Fluid from Toray Dow Corning)
   (a3) Methyl silicone: Trimethylsiloxy-terminated polydimethylsiloxane (SH 200 Fluid 350cSt from Toray Dow Corning)
(B) Acrylic block copolymer: Clarity KL-LA1892 and Clarity LA2140 from Kuraray In the tables, KL-LA1892/LA2140 = 10:1 means a KL-LA1892/LA2140 mixture at a mass ratio of 10:1.
   Similarly, KL-LA1892/LA2140 = 10:2 means a KL-LA1892/LA2140 mixture at a mass ratio of 10:2.
(C) Solid Particles
   - Polytetrafluoroethylene (PTFE powder): Spherical polytetrafluoroethylene resin fine particles having an average particle size of 3.5 µm as measured in a laser diffraction scattering type particle size distribution measurement (dry method) (solid content: 100 wt%)
   - Silicon Oxide: White silicon dioxide powder surface-treated using polyether-modified silicone and having a primary particle size of 16 nm as measured using scanning electron microscopy (solid content: 100 wt%)

The grease composition in each example and comparative example was evaluated using the following methods. The results are shown in Table 1 and Table 2.

### [Falling Ball Test]

In this test, 11 ml of each grease composition was sealed in a polyethylene bag (85 mm × 60 mm), and the noise level at impact when steel balls (3/4-inch, 28 g) were dropped from 30 cm was measured using a noise meter. The level of the noise at impact was evaluated using the following standards.
⊚: <77 dB
○: 77d B to 78 dB
×: ≥ 78 dB

### [High-Temperature Grease Stability]

Each grease composition prepared at the ratios shown in Table 1 and Table 2 was applied to frosted glass to obtain a 2 mm thick, 10 mm diameter sample. This was placed flat under the conditions described below. The diameter of the base oil separation range (mm) and the spread of the grease composition were evaluated using the standards described below.
Condition 1: 24 hours at 100°C
Condition 2: 72 hours at 150°C

### Grease Stability:

○: Diameter of base oil separation was less than 16 mm and the grease did not spread
(Because the grease was applied to a diameter of 10 mm, a base oil separation diameter of 10 mm means the diameter did not change after application of the grease and there was hardly any separation.)
×: Diameter of base oil separation equal to or greater than 16 mm and the grease spread

### < Evaluation Methods >

### [Lubricity Measurement]

A four ball test was conducted under the following conditions. Afterwards, the diameter of the abrasion marks was measured under a microscope and the average value was used.

| | |
|---|---|
| Measurement Device: | Four Ball Tester |
| Test Piece: | 1/2-inch steel bearing balls (SUJ2) |

### Testing Conditions

| | |
|---|---|
| Rotational Speed: | 1200 rpm |
| Load: | 10 kgf |
| Time: | 1 hour |

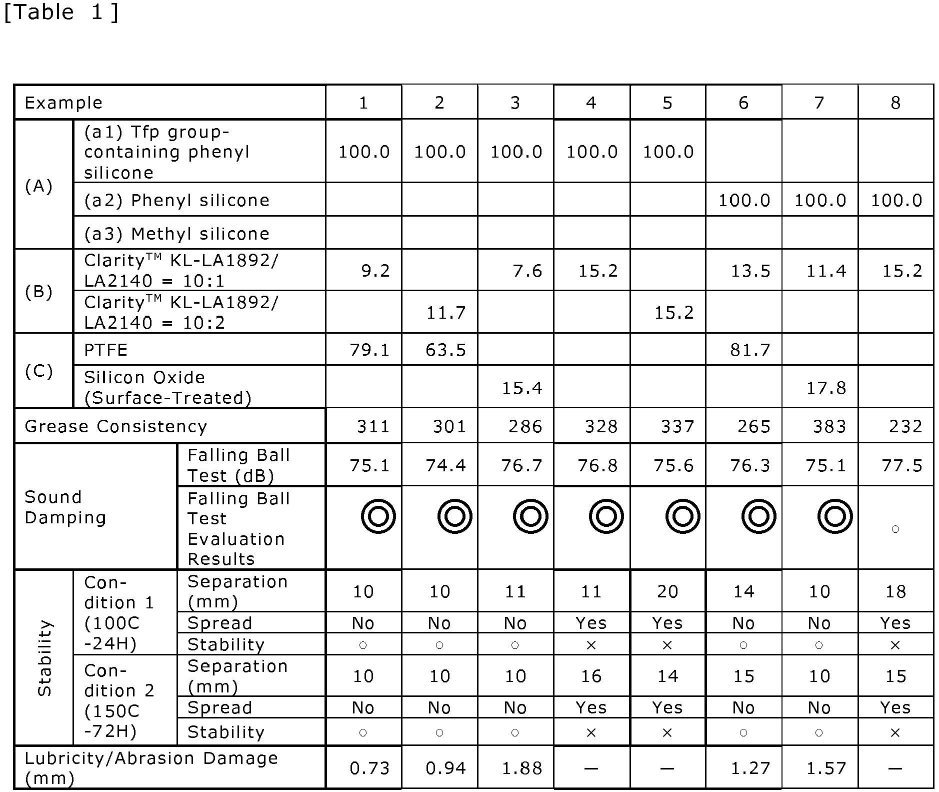

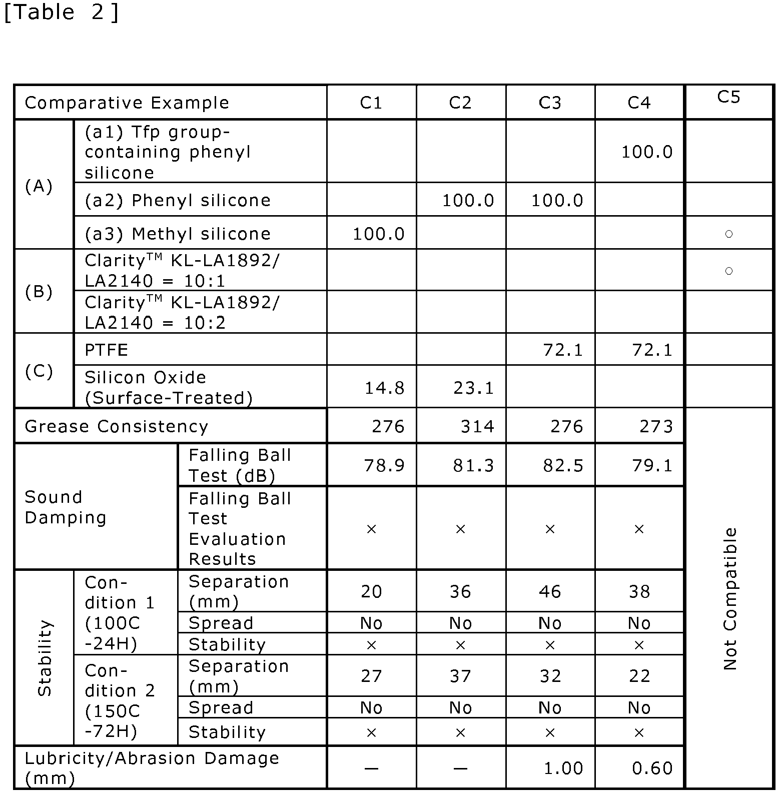

## Claims

1. A grease composition comprising: 100 parts by mass (A) aryl group-containing polyorganosiloxane; and 1 to 50 parts by mass (B) acrylic block copolymer having a weight average molecular weight of from 10,000 to 1,000,000 and a molecular weight distribution [ratio (Mw/Mn) of weight average molecular weight (Mw) to number average molecular weight (Mn)] of 1.5 or less, component (B) being from 1 to 40 mass% of the overall composition.

2. A grease composition according to claim 1, wherein component (A) is an aryl group-containing polyorganosiloxane having at least 10 mol% phenyl groups among all monovalent functional groups bound to silicon atoms.

3. A grease composition according to claim 1 or 2, further comprising from 1 to 200 parts by mass (C) solid particles.

4. A grease composition according to any one of claims 1 to 3, wherein component (A) also has in the molecule a fluoroalkyl group represented by -(CH₂)ₓ-R¹ (where R¹ is a perfluoroalkyl group having from 1 to 12 carbon atoms and x is a number in a range of from 0 to 6).

5. A grease composition according to any one of claims 1 to 4, wherein component (A) is a copolymer-type aryl group-containing polyorganosiloxane containing the following disiloxane unit (a1):
SiR²((CH₂)x-R¹)O₂/₂
(where R¹ is a perfluoroalkyl group having from 1 to 12 carbon atoms, R² is an alkyl group having from 1 to 6 carbon atoms, and x is a number in a range of from 0 to 6); and
the following disiloxane unit (a2):
SiR²(Ph)O₂/₂
(where R² is the same as above and Ph is a phenyl group), the kinetic viscosity at 25°C of component (A) being in a range of from 100 to 100,000 mm²/s.

6. A grease composition according to any one of claims 1 to 5, wherein component (B) is a block copolymer having at least one type of structure selected from among those represented by formulas (Y-Z)ₐ, (Y-Z)_{b}-Y and (Z-Y)_{c}-Z [where Y is a polymer block composed of a (meth) acrylic acid alkyl ester unit with an alkyl group having from 1 to 3 carbon atoms; Z is a polymer block composed of a (meth) acrylic acid alkyl ester unit with an alkyl group having from 4 to 30 carbon atoms; and a, b and c are the same or different integer from 1 to 10].

7. A grease composition according to any one of claims 1 to 6, wherein component (B) is a block copolymer having at least one type of structure selected from among those represented by formulas (Y-Z)ₐ, (Y-Z)_{b}-Y and (Z-Y)_{c}-Z [where Y is a polymer block composed of a (meth) acrylic acid alkyl ester unit with an alkyl group having from 1 to 3 carbon atoms; Z is a polymer block composed of a (meth) acrylic acid alkyl ester unit with an alkyl group having from 4 to 30 carbon atoms; and a, b and c are the same or different integer from 1 to 10], the Y:Z mass ratio of the overall mass of the copolymer block represented by Y and the overall mass of the copolymer block represented by Z being from 1:99 to 40:60.

8. A grease composition according to any one of claims 3 to 7, wherein component (C) is at least one type of solid lubricant selected from among fluorine resin, polyethylene resin, polyamide resin, polypropylene resin, polyimide resin, silicone resin, molybdenum disulfide, graphite, silicon oxide, aluminum oxide, zinc oxide, titanium oxide, and zirconium oxide.

9. A grease composition according to any one of claims 3 to 8, wherein component (C) is a solid lubricant containing a fluororesin, and from 1 to 60 mass% of the overall grease composition is component (C).

10. A grease composition according to any one of claims 3 to 9, wherein component (C) is polytetrafluoroethylene (PTFE).

11. A sliding member to which a grease composition according to any one of claims 1 to 10 has been applied.

12. A brake member to which a grease composition according to any one of claims 1 to 10 has been applied.

13. A component such as a drive component, sliding component, or moving component having a sliding member according to claim 11.

14. A mechanical device such as an automobile, copying machine, or printing machine having a sliding member according to claim 11.

15. A noise-reducing method for a mechanical device comprising: applying a grease composition according to any one of claims 1 to 10 to a noise-generating site.
